# EUROPÄISCHE PATENTANMELDUNG

(11) **EP 2 671 688 A1**
(43) Veröffentlichungstag der Anmeldung: **11.12.2013**
(21) Anmeldenummer: 13170785.3
(22) Anmeldetag: 06.06.2013
(51) Int. Cl.: B25J 9/00, B25J 15/00

(54) **Verbindungselement**

(30) Priorität: 08.06.2012 DE 202012102102 U; 07.12.2012 US 201213707794
(71) Anmelder: DE-STA-CO Europe GmbH, 61440 Oberursel (DE)
(72) Erfinder: Ulle, Detlev, 97645 Ostheim (DE)
(74) Vertreter: Wolf, Michael

(57) **Zusammenfassung**

Die Erfindung betrifft ein Verbindungselement, umfassend einen Grundkörper (1) mit einer ersten Schnittstelle (2) zur Anbindung an einen Roboter und mehreren zweiten Schnittstellen (3) zur Anbindung von Spannrahmenelementen. Nach der Erfindung ist vorgesehen, dass der Grundkörper (1) mit seinen Schnittstellen (2, 3) aus einem Faser-Kunststoff-Verbundwerkstoff gebildet ist.

## Beschreibung

Die Erfindung betrifft ein Verbindungselement gemäß dem Oberbegriff des Patentanspruchs 1.

Ein Verbindungselement der eingangs genannten Art wird von der Anmelderin als Bauteil der Greiferorganserie mit dem Markennamen "SpiderGrip" produziert und vertrieben. Dieses Verbindungselement besteht aus einen Grundkörper mit einer ersten Schnittstelle zur Anbindung an einen Roboter und mehreren zweiten Schnittstellen zur Anbindung von Spannrahmenelementen. Es dient zum Beispiel in der Automobilindustrie zum Aufbau von Fertigungsstraßen, bei denen Roboter vorgesehen sind, an deren Armen so genannte Spannrahmen mit diversen Spannvorrichtungen angeordnet sind. Mit solchen Spannrahmen lassen sich zum Beispiel Karosserieteile für den Fügeprozess (Schweißprozess) punktgenau positionieren.

Der Erfindung liegt die Aufgabe zugrunde, ein Verbindungselement der eingangs genannten Art zu verbessern. Insbesondere soll das Verbindungselement derart weiterentwickelt werden, dass noch höhere Fertigungstaktzahlen möglich sind.

Diese Aufgabe ist mit einem Verbindungselement der eingangs genannten Art durch die im Kennzeichen des Patentanspruchs 1 aufgeführten Merkmale gelöst.

Nach der Erfindung ist also vorgesehen, dass das Grundkörper mit seinen Schnittstellen aus einem Faser-Kunststoff-Verbundwerkstoff gebildet ist.

Mit anderen Worten zeichnet sich die erfindungsgemäße Lösung dadurch aus, dass der bisher aus Aluminium gebildete Grundkörper nunmehr durch einen Grundkörper aus einem Faser-Kunststoff-Verbundwerkstoff, besonders bevorzugt ein Carbon-faserverstärkter Kunststoff, ersetzt wird. Diese Maßgabe führt bei mindestens gleicher Stabilität zu einer erheblichen Gewichtsreduzierung des Grundkörpers und seiner Schnittstellen, was wiederum zur Folge hat, dass die gesamte Spannrahmenkonstruktion aufgrund der reduzierten Trägheitskräfte erheblich schneller vom Roboter bewegt werden kann.

Andere vorteilhafte Weiterbildungen des erfindungsgemäßen Verbindungselements ergeben sich aus den abhängigen Patentansprüchen.

Das erfindungsgemäße Verbindungselement einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

### Es zeigt perspektivisch

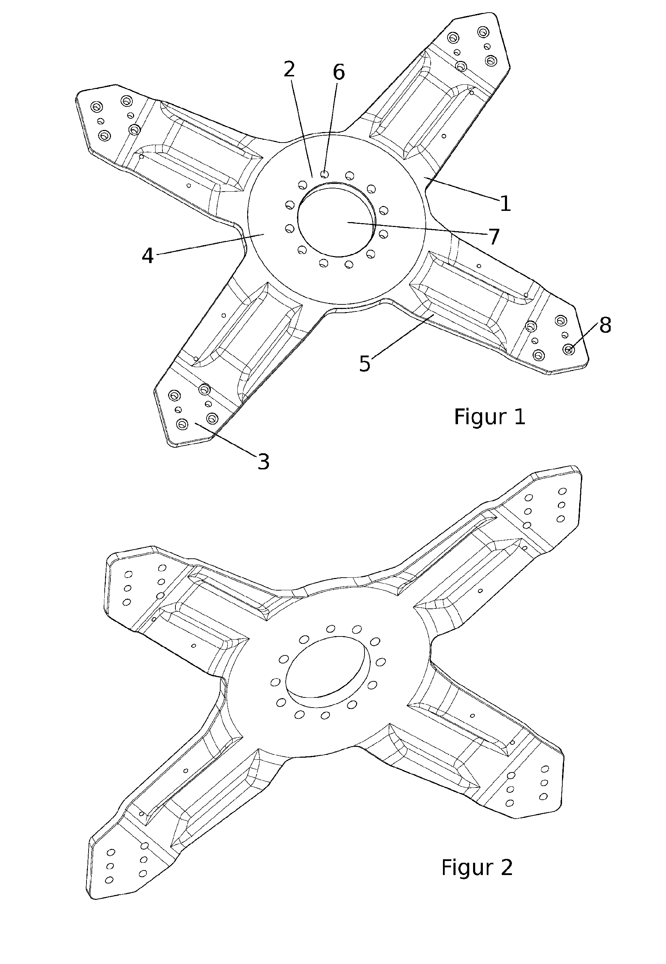

- Figur 1: das erfindungsgemäße Verbindungselement in Draufsicht; und
- Figur 2: das Verbindungselement gemäß Figur 1 in Unteransicht.

Das in den Figuren dargestellte Verbindungselement besteht aus einem Grundkörper 1 mit einer ersten Schnittstelle 2 zur Anbindung an einen Roboter und mehreren zweiten Schnittstellen 3 zur Anbindung von Spannrahmenelementen. Unter Spannrahmenelementen sind dabei zum Beispiel stab- bzw. rohrförmige Rahmenteile mit entsprechenden Verbindungsschellen zu verstehen, an denen typischer Weise eine Vielzahl von Spannvorrichtungen angeordnet sind.

Wesentlich für das erfindungsgemäße Verbindungselement ist nun, dass der Grundkörper 1 mit seinen Schnittstellen 2, 3 aus einem Faser-Kunststoff-Verbundwerkstoff gebildet ist. Besonders bevorzugt ist dabei vorgesehen, dass als Faser-Kunststoff-Verbundwerkstoff ein Carbon-faserverstärkter Kunststoff verwendet wird. Diese Maßgabe führt, wie eingangs erläutert, zu einer erheblichen Gewichtsreduktion des Verbindungselements und damit zur Möglichkeit, dieses aufgrund der reduzierten Trägheitskräfte wesentlich schneller bewegen zu können. In Zahlen ausgedrückt: Wog ein aus Aluminium hergestelltes Verbindungselement etwa 14 kg, so wiegt das erfindungsgemäße Verbindungselement aus dem Faser-Kunststoff-Verbundwerkstoff lediglich noch 4 kg, was einer Gewichtseinsparung von mehr als 70% entspricht.

Wie aus den Figuren ersichtlich, ist der Grundkörper 1 sternförmig ausgebildet. Weiterhin besteht er aus einem Zentralelement 4 mit der ersten Schnittstelle 2 und aus mehreren Armelementen 5 mit den zweiten Schnittstellen 3. Dabei sind die zweiten Schnittstellen 3 an zentralelementfernen Enden der Armelemente 5 angeordnet.

Besonders bevorzugt, weist der Grundkörper 1 eine erste Schnittstelle 2, vier Armelemente 5 mit insgesamt vier zweiten Schnittstellen 3 auf, wobei weiterhin jeweils zwei Armelemente 5 in ihrer Haupterstreckungsrichtung gesehen parallel zueinander verlaufend angeordnet sind.

Zur Erhöhung der Stabilität des Verbindungselements ist vorgesehen, dass zwischen der ersten Schnittstelle 2 und den zweiten Schnittstellen 3 angeordnete Bereiche des Grundkörpers 1 rippenförmig ausgebildet sind. Unter "rippenförmig" ist dabei zu verstehen, dass diese Bereiche nicht als ebene Platten, sondern als dreidimensional gewölbte, entsprechend biegesteife Verbindungsbereiche ausgebildet sind.

Insgesamt betrachtet besteht das Verbindungselement komplett aus dem Faser-Kunststoff-Verbundwerkstoff, d. h. sein Grundkörper ist aus einem im Ganzen betracht homogenen Material gebildet, welches einerseits aus Fasern und andererseits aus dem die Fasern verbindenden Kunststoff (typischer Weise ein Harz, insbesondere Phenolharz) besteht.

Wie aus den Figuren ersichtlich, ist die erste Schnittstelle 2 zentral, insbesondere mittig, am Grundkörper 1 angeordnet. Weiterhin ist die erste Schnittstelle 2 als ebene Platte, und zwar insbesondere als kreisförmige Scheibe, mit Bohrungen 6 ausgebildet, wobei diese Bohrungen 6 kreisförmig auf der Platte verteilt angeordnet sind. Im Zentrum der kreisförmig verteilt angeordneten Bohrungen 6 ist außerdem eine als Zentrierung dienende Durchgangsöffnung 7 an der Platte angeordnet.

Bezüglich der zweiten Schnittstellen 3 ist vorgesehen, dass diese ebenfalls als ebene Platten mit Bohrungen 8 ausgebildet sind, wobei die ebene Platte der ersten Schnittstelle 2 parallel verlaufend zu den ebenen Platten der zweiten Schnittstellen 3 angeordnet ist, d. h. das Verbindungselement weist insgesamt eine angenähert plattenförmige Gestalt auf, wobei allerdings - wie aus den Figuren ersichtlich - die erste Schnittstelle 2 bevorzugt in einer anderen Ebene als die zweiten Schnittstellen 3 angeordnet ist.

Bezüglich der Bohrungen 6, 8, die, wie ersichtlich, zur Anbindung an den Roboter bzw. den Spannrahmen dienen, ist schließlich bevorzugt vorgesehen, dass diese wahlweise als Durchgangs- und/oder Gewindebohrungen ausgebildet sind.

### Bezugszeichenliste

- 1: Grundkörper
- 2: erste Schnittstelle
- 3: zweite Schnittstelle
- 4: Zentralelement
- 5: Armelement
- 6: Bohrung
- 7: Durchgangsöf
- 8: Bohrung

## Patentansprüche

1. Verbindungselement, umfassend einen Grundkörper (1) mit einer ersten Schnittstelle (2) zur Anbindung an einen Roboter und mehreren zweiten Schnittstellen (3) zur Anbindung von Spannrahmenelementen,
**dadurch gekennzeichnet,**
**dass** der Grundkörper (1) mit seinen Schnittstellen (2, 3) aus einem Faser-Kunststoff-Verbundwerkstoff gebildet ist.

2. Verbindungselement nach Anspruch 1,
**dadurch gekennzeichnet,**
**dass** als Faser-Kunststoff-Verbundwerkstoff ein Carbon-faserverstärkter Kunststoff vorgesehen ist.

3. Verbindungselement nach Anspruch 1 oder 2,
**dadurch gekennzeichnet,**
**dass** der Grundkörper (1) sternförmig ausgebildet ist.

4. Verbindungselement nach Anspruch 3,
**dadurch gekennzeichnet,**
**dass** der sternförmige Grundkörper (1) aus einem Zentralelement (4) mit der ersten Schnittstelle (2) und aus mehreren Armelementen (5) mit den zweiten Schnittstellen (3) gebildet ist.

5. Verbindungselement nach Anspruch 4,
**dadurch gekennzeichnet,**
**dass** die zweiten Schnittstellen (3) an zentralelementfernen Enden der Armelemente (5) angeordnet sind.

6. Verbindungselement nach einem der Ansprüche 1 bis 5,
**dadurch gekennzeichnet,**
**dass** der Grundkörper (1) eine erste Schnittstelle (2), vier Armelemente (5) mit insgesamt vier zweiten Schnittstellen (3) aufweist.

7. Verbindungselement nach Anspruch 6,
**dadurch gekennzeichnet,**
**dass** jeweils zwei Armelemente (5) in ihrer Haupterstreckungsrichtung gesehen parallel zueinander verlaufend angeordnet sind.

8. Verbindungselement nach einem der Ansprüche 1 bis 7,
**dadurch gekennzeichnet,**
**dass** zwischen der ersten Schnittstelle (2) und den zweiten Schnittstellen (3) angeordnete Bereiche des Grundkörpers (1) rippenförmig ausgebildet sind.

9. Verbindungselement nach einem der Ansprüche 1 bis 8,
**dadurch gekennzeichnet,**
**dass** die erste Schnittstelle (2) zentral, insbesondere mittig, am Grundkörper (1) angeordnet ist.

10. Verbindungselement nach einem der Ansprüche 1 bis 9,
**dadurch gekennzeichnet,**
**dass** die erste Schnittstelle (2) als ebene Platte mit Bohrungen (6) ausgebildet ist.

11. Verbindungselement nach Anspruch 10,
**dadurch gekennzeichnet,**
**dass** die ebene Platte als kreisförmige Scheibe ausgebildet ist und die Bohrungen (6) kreisförmige verteilt angeordnet sind.

12. Verbindungselement nach Anspruch 11,
**dadurch gekennzeichnet,**
**dass** im Zentrum der kreisförmig verteilt angeordneten Bohrungen (6) eine Durchgangsöffnung (7) an der Platte angeordnet ist.

13. Verbindungselement nach einem der Ansprüche 1 bis 12,
**dadurch gekennzeichnet,**
**dass** die zweiten Schnittstelle (3) als ebene Platten mit Bohrungen (8) ausgebildet sind.

14. Verbindungselement nach Anspruch 10 und 13,
**dadurch gekennzeichnet,**
**dass** die ebene Platte der ersten Schnittstelle (2) parallel verlaufend zu den ebenen Platten der zweiten Schnittstellen (3) angeordnet ist.

15. Verbindungselement nach Anspruch 10 und 13,
**dadurch gekennzeichnet,**
**dass** die Bohrungen (6, 8) wahlweise als Durchgangs- und/oder Gewindebohrungen ausgebildet sind.
